# EUROPEAN PATENT APPLICATION

(11) **EP 4 207 639 A1**
(43) Date of publication of application: **05.07.2023**
(21) Application number: 21860574.9
(22) Date of filing: 31.08.2021

(54) **ACL RULE PROCESSING METHOD AND APPARATUS, COMPUTER DEVICE, AND READABLE MEDIUM**

(30) Priority: 31.08.2020 CN 202010896921
(71) Applicant: Sanechips Technology Co., Ltd., Shenzhen, Guangdong 518055 (CN)
(72) Inventor: LIU, Fengsong, Shenzhen, Guangdong 518057 (CN); WANG, Siyu, Shenzhen, Guangdong 518057 (CN); ZHU, Zhihua, Shenzhen, Guangdong 518057 (CN); LI, Ning, Shenzhen, Guangdong 518057 (CN)
(74) Representative: Novagraaf Technologies
(86) International application number: PCT/CN2021/115617
(87) International publication number: WO 2022/042742

(57) **Abstract**

The present invention provides a method for processing an Access Control List (ACL) rule, the method comprises: determining a storage address of an ACL rule to be stored based on a priority relationship between the ACL rule to be stored and stored ACL rules; determining, in a case that the ACL rule is stored in the storage address currently, a moving direction based on the storage address, a priority baseline pointer parameter, a maximum storage address of the ACL rules, a null address closest to the storage address in a low address direction, and a null address closest to the storage address in a high address direction; determining a moving destination address at least based on the moving direction; moving ACL rules one by one based on the moving direction and the destination address until the storage address is vacated; and storing the ACL rule to be stored is stored in the storage address, and recording a relative priority of the ACL rule to be stored based on the storage address. The present invention also provides an apparatus for processing an ACL rule, a computer device, and a readable medium.

## Description

### Technical Field

The present disclosure relates to the field of packet classification for communication technology, and in particular to a method and apparatus for processing an Access Control List (ACL) rule, a computer device, and a readable medium.

### Background

ACL hardware implementation solutions are classified into two categories: a Ternary Content Addressable Memory (TCAM) and a Random Access Memory (RAM), in which the TCAM implementation solution directly stores ACL rules by using TCAM hardware characteristics. The RAM solution organizes and stores the ACL rules in an RAM structure through an efficient algorithm, and generally has a low area power consumption implementation cost with a customized forwarding plane architecture.

Since an ACL service itself has a multi-matching characteristic, a priority arbitration module needs to be designed in the forwarding plane architecture for selecting a rule with the highest priority among a plurality of matching rules to be output to a later level. An algorithm solution implemented based on the RAM differs from the TCAM implementation solution in terms of rule priority arbitration, the RAM solution stores rule filtering method information and priority information corresponding to the rules together in the RAM rules, and during multi-rule matching priority arbitration, a final result is decided based on the priority level corresponding to the rule storage. However, the TCAM solution usually decides the final result by hitting a high or low rule storage address.

### Summary

The present invention provides a method and apparatus for processing an ACL rule, a computer device, and a readable medium.

In a first aspect, embodiments of the present invention provide a method for processing an ACL rule, applied to an apparatus for processing an ACL rule, wherein a storage address of an ACL rule in the apparatus is a relative priority of the ACL rule, a priority baseline pointer parameter is preset in the ACL processing apparatus, the priority baseline pointer parameter points to a stored ACL rule with the highest priority, a value of the priority baseline pointer parameter is a relative priority of the stored ACL rule with the highest priority, and the method includes: determining a storage address of an ACL rule to be stored based on a priority relationship between the ACL rule to be stored and stored ACL rules; determining, in a case that an ACL rule is stored in the storage address currently, a moving direction based on the storage address, the priority baseline pointer parameter, a maximum storage address of theACL rules, a null address closest to the storage address in a low address direction, and a null address closest to the storage address in a high address direction; determining a moving destination address at least based on the moving direction; moving the ACL rules one by one based on the moving direction and the destination address until the storage address is vacated, each time a ACL rule is moved, the relative priority of the currently moved ACL rule is updated; and storing the ACL rule to be stored in the storage address, and recording a relative priority of the ACL rule to be stored based on the storage address.

In another aspect, the embodiments of the present invention provide a method for processing an ACL rule, which includes: determining a storage address of an ACL rule to be stored based on a priority relationship between the ACL rule to be stored and stored ACL rules; determining, in a case that the ACL rule is stored in the storage address currently, a moving direction based on the storage address, a priority baseline pointer parameter, a maximum storage address of the ACL rules, a null address closest to the storage address in a low address direction, and a null address closest to the storage address in a high address direction; determining a moving destination address at least based on the moving direction; the ACL rules are moved one by one based on the moving direction and the destination address until the storage address is vacated; and storing the ACL rule to be stored in the storage address, and recording a relative priority of the ACL rule to be stored based on the storage address.

In yet another aspect, the embodiments of the present invention also provide an apparatus for processing an ACL rule, a storage address of an ACL rule in the apparatus for processing an ACL ruleis relative priority of the ACL rule, a priority baseline pointer parameter is preset in the ACL processing apparatus, the priority baseline pointer parameter points to a stored ACL rule with the highest priority, and a value of the priority baseline pointer parameter is the relative priority of the stored ACL rule with the highest priority. The apparatus for processing an ACL rule includes: a result storage module and a priority processing module, the priority processing module including a storage address determination unit, a moving direction determination unit, a destination address determination unit, a moving unit, and a first processing unit. The storage address determination unit is configured to determine a storage address of an ACL rule to be stored based on a priority relationship between the ACL rule to be stored and stored ACL rules. The moving direction determination unit is configured to determine, in a case that the ACL rule is stored in the storage address currently, a moving direction based on the storage address, the priority baseline pointer parameter, a maximum storage address of the ACL rules, a null address closest to the storage address in a low address direction, and a null address closest to the storage address in a high address direction. The destination address determination unit is configured to determine a moving destination address at least based on the moving direction. The moving unit is configured to move the ACL rules one by one based on the moving direction and the destination address until the storage address is vacated, each time the ACL rule is moved, the relative priority of the currently moved ACL rule being updated. The first processing unit is configured to store the ACL rule to be stored in the storage address. The result storage module is configured to record a relative priority of the ACL rule to be stored based on the storage address.

In yet another aspect, the embodiments of the present invention also provide a computer device, which includes: one or more processors; and a storage device, storing one or more programs. The one or more programs are executed by the one or more processors to enable the one or more processors to implement the ACL rule processing method as previously described.

In yet another aspect, the embodiments of the present invention also provide a computer readable medium, storing a computer program. The program, when executed, implements the ACL rule processing method as previously described.

### Brief Description of the Drawings

Fig. 1a is a schematic diagram of forwarding plane RAM hardware storage according to an embodiment of the present invention.
Fig. 1b is a schematic diagram of control plane linked list management according to an embodiment of the present invention.
Fig. 2 is a first schematic diagram of an ACL rule processing flow according to an embodiment of the present invention.
Fig. 3 is a flowchart of determining a moving direction according to an embodiment of the present invention.
Fig. 4 is a flowchart of calculating a moving cost in a low address direction according to an embodiment of the present invention.
Fig. 5 is a second schematic diagram of an ACL rule processing flow according to an embodiment of the present invention.
Fig. 6 is a flowchart of calculating an absolute priority of an ACL rule according to an embodiment of the present invention.
Fig. 7 is a schematic diagram of moving an ACL rule in a scenario without modifying a priority baseline pointer parameter according to an embodiment of the present invention.
Fig. 8 is a schematic diagram of moving an ACL rule in a scenario of modifying a priority baseline pointer parameter according to an embodiment of the present invention.
Fig. 9 is a first schematic structural diagram of an apparatus for processing an ACL rule according to an embodiment of the present invention.
Fig. 10 is a second schematic structural diagram of an apparatus for processing an ACL rule according to an embodiment of the present invention.
Fig. 11 is a third schematic structural diagram of an apparatus for processing an ACL rule according to an embodiment of the present invention.

### Detailed Description of the Embodiments

Exemplary embodiments will be described more completely below with reference to the drawings. However, the exemplary embodiments may be implemented in different forms, and should not be explained as embodiments limited to the descriptions herein. Instead, these embodiments are provided to make the present invention thorough and complete and those skilled in the art understand the scope of the present invention adequately.

As used herein, the term "and/or" includes any and all combinations of one or more of the related listed items.

Terms used herein are only for describing specific embodiments and not intended to limit the present invention. As used herein, singular forms "a/an" and "the" used herein are also intended to cover plural forms, unless otherwise specified in the context. It is also to be understood that terms "include" and/or "prepared from..." used in the specification specify the existence of the feature, entirety, step, operation, element and/or component, but do not exclude the existence or addition of one or more other features, entireties, steps, operations, elements, components and/or groups.

The embodiments described herein may be described with reference to planar and/or cross-sectional drawings by means of an idealized schematic diagram of the present invention. Therefore, the example diagrams may be modified based on manufacturing technology and/or tolerance. Therefore, the embodiments are not limited to the embodiments shown in the drawings, but include modifications to configurations based on manufacturing processes. Therefore, the areas illustrated in the drawings have schematic attributes, and the shapes of the areas shown in the drawings illustrate specific shapes of areas of elements, but are not intended to be restrictive.

Unless otherwise defined, all terms (including technical terms and scientific terms) used herein have the same meanings as commonly understood by those of ordinary in the art. It is also to be understood that terms defined in common dictionaries should be explained as having the same meanings as those in the related art and the background of the present invention rather than having idealized or over-formalized meanings, unless otherwise defined clearly herein.

In a scenario where a user dynamically updates an ACL table, only a relationship between priority level of a currently issued rule and a priority level of a certain issued rule is specified. In an implementation solution of a RAM algorithm, due to matching characteristics of a forwarding plane, each rule must specify a global priority value for final result arbitration, so that a control plane needs to perform implicit priority allocation on the rules issued by the user. A common solution in the industry is to sequentially encode a rule set and set a priority of an initially issued rule to 0 (assuming that 0 is the highest priority). In some scenarios, a priority of a subsequently issued rule is specified to be higher than that of a certain issued rule, and firstly, 1 is added to values of the priorities of all the issued rules which are lower than a priority of the currently issued rule, so that a priority value is vacated, and a priority of a newly issued rule is set as the priority value.

In the above scenario, each time the rule is issued, the priorities of at most all the issued rules need to be modified, namely, the number of operations to modify the priorities of the rules is N, and N is the total number of the issued rules. For ACL with larger capacity, a larger number of operations to modify the priorities of the rules will increase the time from configuration to effectiveness of the ACL rule, and reduce the efficiency of ACL rule configuration.

Therefore, the embodiments of the present invention provide an ACL rule processing solution.

The ACL rule processing solution provided by the embodiments of the present invention relates to two parts: a forwarding plane and a control plane. The forwarding plane is realized by hardware (such as an RAM), and is responsible for completing the functions of priority storage and priority arbitration of a matching message. The control plane is realized by software, and is responsible for allocation of implicit priorities of the rules issued by the user and reading/writing control of hardwares, such as the RAM.

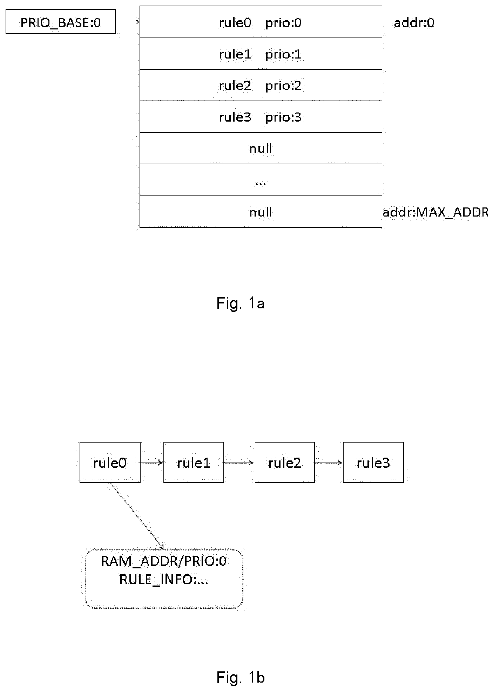

Assuming that the global address range of the forwarding plane RAM is 0-MAX_ADDR, the stored ACL rules in the forwarding plane RAM are stored in order of the relative priorities allocated by the control plane from small to large, and a smaller priority value represents a higher priority, wherein MAX_ADDR is a maximum storage address of the ACL rules, as shown in Fig. 1a. The forwarding plane stores a priority baseline pointer parameter PRIO_BASE, an initial value of the priority baseline pointer parameter is 0, and the control plane software globally stores and manages the priority baseline pointer parameter. The relative priority of each ACL rule stored in the forwarding plane RAM is a serial number of the storage address of each ACL rule.

As shown in Fig. 1b, the control plane manages the rules issued by the user by using a linked list, a head node (the leftmost node) in the linked list corresponds to an ACL rule with the highest priority, and the ACL rule and the relative priority of the ACL rule (i.e. the storage address of the ACL rule) are recorded in each node of the linked list.

The embodiments of the present invention provide a method for processing an ACL rule, applied to an apparatus for processing an ACL rule, wherein storage addresses of ACL rules in the apparatus for processing an ACL rule are relative priorities of the ACL rules, a priority baseline pointer parameter PRIO_BASE is preset in the ACL processing apparatus, the priority baseline pointer parameter points to a stored ACL rule with the highest priority, and a value of the priority baseline pointer parameter is the relative priority of the stored ACL rule with the highest priority.

In some embodiments, the apparatus for processing an ACL rule includes an RAM, and the storage address of the ACL rule is a serial number of the storage address of the ACL rule in the RAM(RAM address).

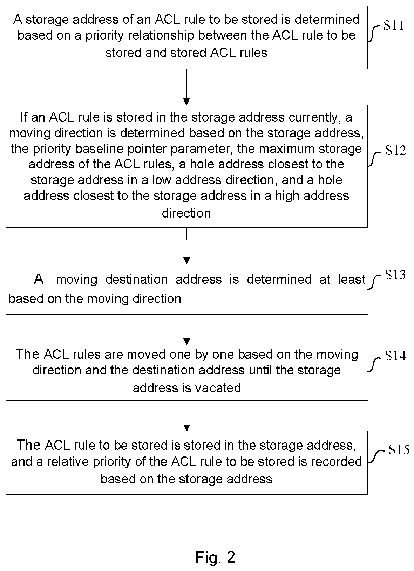

As shown in Fig. 2, the ACL rule processing method provided by an embodiment of the present invention includes the following S11 to S15.

In S11, a storage address of an ACL rule to be stored is determined based on a priority relationship between the ACL rule to be stored and stored ACL rules.

In this step, based on the priority relationship between the ACL rule to be stored specified by the user and the stored ACL rules, the ACL rule to be stored is inserted into a linked list of the control plane, and a storage location (and the storage address) of the ACL rule to be stored in the RAM is determined, which is denoted as ins_pos.

In some embodiments, when a priority of the ACL rule to be stored is lower than a lowest priority k of the stored ACL rules, it indicates that the priority of the ACL rule to be stored is the lowest, and then the storage address of the ACL rule to be stored is (k+1), namely, the ACL rule to be stored is inserted into the tail (rightmost) of the linked list. when the priority of the ACL rule to be stored is higher than the lowest priority k of the stored ACL rules and lower than the highest priority of the stored ACL rules, it indicates that the priority of the ACL rule to be stored is in the middle of the priorities of the stored ACL rules, a maximum priority p of priorities of the stored ACL rules which are lower than the priority of the ACL rule to be stored is determined, and the storage address of the ACL rule to be stored is determined as p, namely, the ACL rule to be stored will be inserted into the linked list before a node with the maximum priority p of priorities which are lower than the priority of the ACL rule to be stored, that is, the priority of the successor node next to the ACL rule to be stored in the linked list is the maximum priority among the priorities which are lower than the priority of the ACL rule to be stored.

In S12, if an ACL rule is stored in the storage address currently, a moving direction is determined based on the storage address, the priority baseline pointer parameter, the maximum storage address of the ACL rules, a null address closest to the storage address in a low address direction, and a null address closest to the storage address in a high address direction.

The moving direction includes the low address direction and the high address direction. The priority baseline pointer parameter managed by the control plane is set to be PRIO_BASE, the maximum storage address of the ACL rules is set to be MAX_ADDR, the null address closest to the storage address in the low address direction is set to be m, and the null address closest to the storage address in the high address direction is set to be n.

In this step, when another ACL rule is stored in the storage address ins_pos currently, a moving direction of the ACL rule needs to be determined, so that the storage address ins_pos is vacated, so as to store the ACL rule to be stored. It is to be noted that, when the storage address ins_pos is null currently, it indicates that no otherACL rule is stored in the storage address ins_pos, thus no ACL rule needs to be moved, and the ACL rule to be stored will be directly stored in the storage address ins_pos.

In S13, a moving destination address is determined at least based on the moving direction.

The destination address is denoted as dst_pos.

In S14, the ACL rules are moved one by one based on the moving direction and the destination address until the storage address is vacated.

It is to be noted that, each time an ACL rule is moved, since the storage address of the ACL rule changes, the relative priority of the currently moved ACL rule is updated accordingly. That is, each time an ACL rule is moved, the relative priority value information of the ACL rule recorded in the linked list of the control plane is modified, and the updated relative priority value of the ACL rule is synchronously written into the RAM.

In this step, when the moving direction is the low address direction, the ACL rule with the storage address (dst_pos+1) is moved to the location with the storage address dst_pos, then the ACL rule with the storage address (dst_pos+2) is moved to the location with the storage address (dst_pos+1), and so on, until the storage address ins_pos, which is the location where the ACL rule to be stored will be inserted, is vacated. When the moving direction is the high address direction, the ACL rule with the storage address (dst_pos-1) is moved to the location with the storage address dst_pos, then the ACL rule with the storage address (dst_pos-2) is moved to the location with the storage address (dst_pos-1), and so on, until the storage address ins_pos is vacated.

In S15, the ACL rule to be stored is stored in the storage address, and a relative priority of the ACL rule to be stored is recorded based on the storage address.

In this step, the ACL rule to be stored is inserted in the storage address ins_pos, and the relative priority of the ACL rule to be stored is written in the RAM.

According to the ACL rule processing method and apparatus provided by the embodiments of the present invention, a storage address of the ACL rule to be stored is determined based on the priority relationship between the ACL rule to be stored and the stored ACL rules; in a case that an ACL rule is stored in the storage address currently, a moving direction is determined based on the storage address, the priority baseline pointer parameter, the maximum storage address of the ACL rules, the null address closest to the storage address in the low address direction, and the null address closest to the storage address in the high address direction; a moving destination address is determined at least based on the moving direction; the ACL rules are moved one by one based on the moving direction and the destination address until the storage address is vacated; and then the ACL rule to be stored is stored in the storage address, and the relative priority of theACL rule to be stored is recorded based on the storage address. In the embodiments of the present invention, the priority baseline pointer parameter is globally maintained, so as to always point to the ACL rule with the highest priority, and the priority baseline pointer parameter is used as a consideration factor for determining the moving direction in the process of moving the stored ACL rules, so that the moving cost is reduced, and the moving times is reduced by at least half, thereby reducing the number of hardware operations, improving the rate of dynamic download Lists of the ACLs and improving the ACL rule updating efficiency.

In some embodiments, as shown in Fig. 2, the operation that the moving direction is determined based on the storage address, the priority baseline pointer parameter, the maximum storage address of the ACL rules, the null address closest to the storage address in the low address direction, and the null address closest to the storage address in the high address direction (i.e. S12) includes the following S21 to S23.

In S21, a moving cost in the low address direction is calculated based on the storage address, the priority baseline pointer parameter, the maximum storage address of the ACL rules, and the null address closest to the storage address in the low address direction.

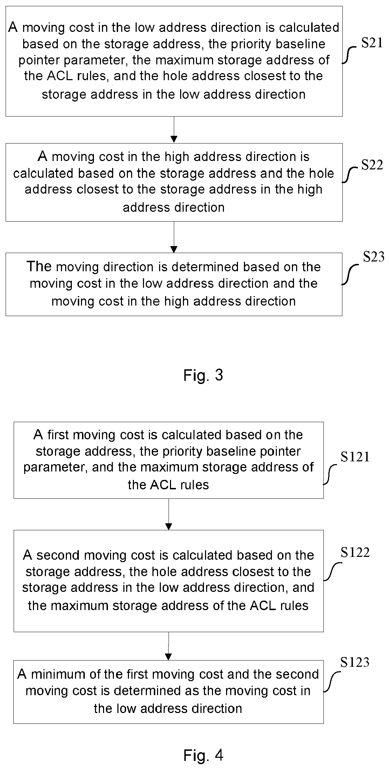

A specific implementation for calculating the moving cost in the low address direction cost-low will be described in detail below in conjunction with Fig. 4.

In S22, a moving cost in the high address direction is calculated based on the storage address and the null address closest to the storage address in the high address direction.

In some embodiments, the moving cost in the high address direction cost_high is obtained by calculating a difference between the null address n closest to the storage address in the high address direction and the storage address ins_pos, that is, cost_high=n-ins_pos.

In S23, the moving direction is determined based on the moving cost in the low address direction and the moving cost in the high address direction.

In some embodiments, the operation that the moving direction is determined based on the moving cost in the low address direction and the moving cost in the high address direction includes: determining a minimum of the moving cost in the low address direction and the moving cost in the high address direction, and using a direction corresponding to the minimum as the moving direction.

It is to be noted that the execution sequence of S21 and S22 is not limited, and S21 and S22 may be executed simultaneously.

It can be seen from S21-S23 that the moving cost reflects the moving times of the ACL rules, and the less the moving cost is, the less the moving times of the ACL rules is. By comparing the moving cost in the low address direction cost-low with the moving cost in the high address direction cost_high, the moving direction corresponding to the minimum is selected as the moving direction of the ACL rules at this time, which reduces the moving times.

In some embodiments, as shown in Fig. 4, the operation that the moving cost in the low address direction is calculated based on the storage address, the priority baseline pointer parameter, the maximum storage address of the ACL rules, and the null address closest to the storage address in the low address direction (i.e. S21) includes the following S121 to S123.

In S121, a first moving cost is calculated based on the storage address, the priority baseline pointer parameter, and the maximum storage address of the ACL rules.

The first moving cost cost_base is a moving cost from the storage address ins_pos to an ACL rule address pointed to by the priority baseline pointer parameter PRIO_BASE.

In some embodiments, when the storage address is lower than the value of the priority baseline pointer parameter, form a closed loop of addresses for storing the ACL rules, and the first moving cost is calculated in the loop in the low address direction, namely, when ins_pos<PIRO_BASE, the first moving cost cost_base=the maximum storage address MAX_ADDR of the ACL rule-the value of the priority baseline pointer parameter PIRO_BASE+2+the storage address ins_pos. That is, in a case of ins_pos<PIRO_BASE, the first moving cost needs to be calculated in the loop in the low address direction.

When the storage address is higher than or equal to the value of the priority baseline pointer parameter, the first moving cost is calculated in the high address direction, namely, if ins_pos (i.e.p)≥PIRO_BASE, the first moving cost cost_base=the storage address ins_pos-the value of the priority baseline pointer parameter PIRO_BASE+1. That is, in a case of ins_pos (i.e. p)≥ PIRO_BASE, the first moving cost does not need to be calculated in a loop, but directly in the high address direction.

Calculation in a loop means that an address loop is formed by proceeding in the low address direction across from the location where the storage address is 0 to the rightmost location of the address, and calculation is performed based on the address loop. The loop calculation is used when calculating the first moving cost cost_base or when calculating the second moving cost cost_m.

In S122, a second moving cost is calculated based on the storage address, the null address closest to the storage address in the low address direction, and the maximum storage address of the ACL rules.

The second moving cost cost_m is a moving cost from the storage address ins_pos to the null address m closest to the storage address ins_pos in the low address direction.

In some embodiments, when the storage address is less than the null address closest to the storage address in the low address direction, form a closed loop of addresses for storing the ACL rules, and the second moving cost is calculated in the loop in the low address direction. Namely, if ins_pos<m, the second moving cost cost_m=the maximum storage address MAX_ADDR+1 of the ACL rule-the null address m closest to the storage address in the low address direction+the storage address ins_pos. That is, in a case of ins_pos<m, the second moving cost needs to be calculated in a loop in the low address direction.

When the storage address is higher than or equal to the null address closest to the storage address in the low address direction, the second moving cost is calculated in the high address direction. Namely, if ins_pos≥m, the second moving cost cost_m=the storage address ins_pos-the null address m closest to the storage address in the low address direction. That is, in a case of ins_pos≥m, the second moving cost does not need to be calculated in a loop, but directly calculated in the high address direction.

Due to the design of the priority baseline pointer parameter, moving the ACL rule in the low address direction from the location where the storage address is 0 to a null location or a location pointed to by the priority baseline pointer parameter is allowable, and the moving cost of moving from the location where the storage address is 0 to the location of MAX_ADDR is 1, so that when the destination address value (i.e. m or PIRO_BASE) is higher than an original address value (ins_pos), the moving cost in the low address direction is MAX_ADDR+1-the destination address value+theoriginal address value. It is to be noted that when the first moving cost is calculated, the destination address value is actually PRIO_BASE-1.

In S123, a minimum of the first moving cost and the second moving cost is determined as the moving cost in the low address direction.

In this step, the moving cost in the low address direction=MIN(cost_base, cost_m).

In some embodiments, the operation that the moving destination address is determined at least based on the moving direction (i.e. S13) includes: when the moving direction is the low address direction and the moving cost in the low address direction is the first moving cost, determining the moving destination address by subtracting 1 from the value of the priority baseline pointer parameter;when the moving direction is the low address direction and the moving cost in the low address direction is the second moving cost, determining the moving destination address to be the null address closest to the storage address in the low address direction; when the moving direction is the high address direction, determining the moving destination address to be the null address closest to the storage address in the high address direction. That is, if the selected moving direction is the low address direction and MIN(cost_base, cost_m)=cost_base, dst pos=PIRO_BASE-1. If the selected moving direction is the low address direction and MIN(cost_base, cost_m)=cost_m, dst_pos=m. If the selected moving direction is the high address direction, dst_pos=n.

In some embodiments, when the moving direction is the low address direction and the moving cost in the low address direction is the first moving cost, after the moving destination address is determined at least based on the moving direction, the method further includes the following step of: subtracting 1 from the value of the priority baseline pointer parameter. That is, in a case where the moving direction is the low address direction and MIN(cost_base, cost_m)=cost_base, the ACL rule pointed to by the priority baseline pointer parameter PIRO_BASE needs to be moved, and accordingly, after the moving destination address is determined, the value of the priority baseline pointer parameter PIRO_BASE also needs to be adjusted accordingly (still pointing to the ACL rule with the highest priority after the location is moved). It is to be noted that in a case where the moving direction is the low address direction and the moving cost in the low address direction is the second moving cost, and in a case where the moving direction is the high address direction, the ACL rule pointed to by the priority baseline pointer parameter PIRO_BASE is not moved, and accordingly, the value of the priority baseline pointer parameter PIRO_BASE is not adjusted.

It is to be noted that the execution sequence of S121 and S122 is not limited, and for example, S121 and S122may be executed simultaneously.

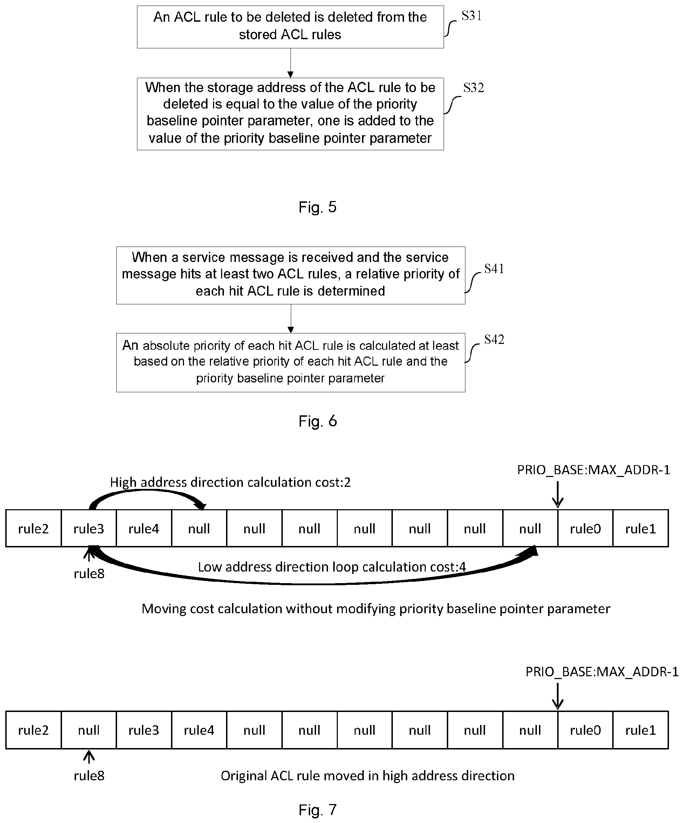

The above is a flow of storing the ACL rule (written into the RAM). A flow of deleting the ACL rule is described in detail below in conjunction with Fig. 5.

As shown in Fig. 5, the ACL rule processing method may further include the following steps S31 to S32.

In S31, an ACL rule to be deleted is deleted from the stored ACL rules.

In this step, a node of the linked list corresponding to the linked list of the control plane is indexed based on ACL rule deletion information issued by the user, and the ACL rule stored in the forwarding plane RAM is cleared based on the priority information recorded by the node of the linked list.

In S32, when the storage address of the ACL rule to be deleted is equal to the value of the priority baseline pointer parameter, 1 is added to the value of the priority baseline pointer parameter.

In some embodiments, after S32, the ACL rule processing method may further include: deleting the node of the linked list corresponding to the deleted ACL rule in the linked list of the control plane.

The priority of the ACL rule stored in the RAM is the relative priority, but in a service message forwarding stage, priority arbitration is performed based on an absolute priority of the ACL rule, and therefore the relative priority of the ACL rule needs to be converted into the absolute priority. Therefore, as shown in Fig. 6, the ACL rule processing method may further include the following S41 to S42.

In S41, when a service message is received and the service message hits at least two ACL rules, are lative priority of each hit ACL rule is determined.

In S42, an absolute priority of each hit ACL rule is calculated at least based on the relative priority of each hit ACL rule and the priority baseline pointer parameter.

In some embodiments, if the relative priority r_prio of the hit ACL rule is higher than or equal to the value of the priority baseline pointer parameter PRIO_BASE, the absolute priority prio of the hit ACL rule is calculated in the high address direction based on the relative priority r_prio of the hit ACL rule and the value of the priority baseline pointer parameter PRIO_BASE. If r_prio≥PRIO_BASE, prio=r_prio-PRIO_BASE. That is, in a case of r_prio≥PRIO_BASE, the absolute priority does not need to be calculated in a loop, but directly calculated in the high address direction.

When the relative priority r_prio of the hit ACL rule is lower than the priority baseline pointer parameter PRIO_BASE, forma closed loop of the addresses for storing the ACL rules, and the absolute priority prio of the hitACL rule is calculated in the loop in the low address direction based on the relative priority r_prio of the hit ACL rule, the value of priority baseline pointer parameter PRIO_BASE, and the maximum storage address MAX_ADDR of the ACL rule. If r_prio<PRIO_BASE,prio=MAX_ADDR+1-PRIO_BASE+r_prio, that is, in a case of r_prio<PRIO_BASE, the absolute priority needs to be calculated in a loop in the low address direction.

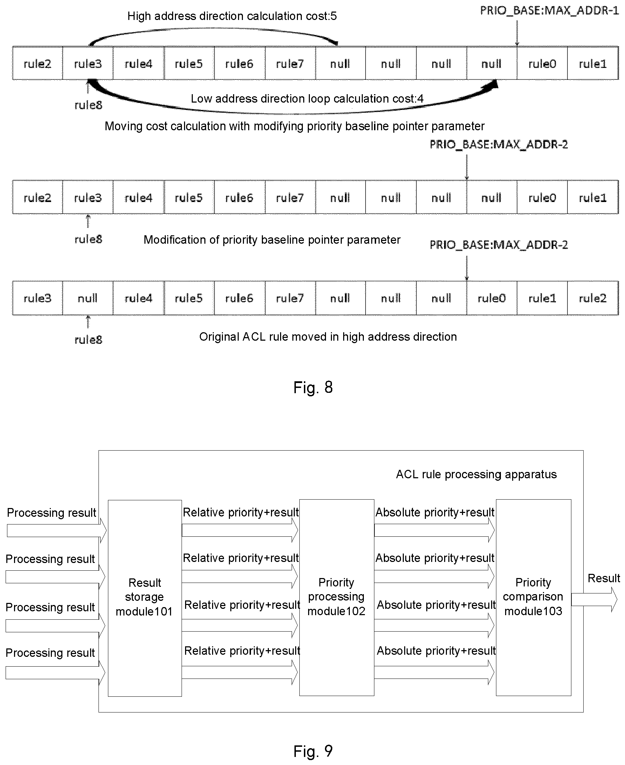

In order to clearly describe the solutions of the embodiments of the present invention, the ACL rule moving process in the scenario without modifying the priority baseline pointer parameter and in the scenario of modifying the priority baseline pointer parameter is described in detail below in conjuction with Figs. 7 and 8.

As shown in Fig. 7, the ACL rule to be stored is rule8, the storage address ins_pos thereof is the current storage location of rule3, the priority baseline pointer parameter PRIO_BASE points to rule0, a position after rule4 is the null address n closest to the storage address in the high address direction, and there is no null in the low address direction. Therefore, the moving cost in the low address direction cost-low is cost_base=4 (rule2, rule1, rule0, null), and the moving cost in the high address direction cost_high=2 (rule4, null), so that the moving direction is determined as the high address direction. Since the moving direction is the high address direction, the value of the priority baseline pointer parameter PRIO_BASE needs not to be modified. The rule4 and rule3 are moved in the high address direction one by one until the location of the storage address ins_pos is vacated and rule8 is stored in the location.

As shown in Fig. 8, the ACL rule to be stored is rule8, the storage address ins_pos thereof is the current storage location of rule3, the priority baseline pointer parameter PRIO_BASE points to rule0, a position after rule7 is the null address n closest to the storage address in the high address direction, and there is no null in the low address direction. Therefore, the moving cost in the low address direction cost-low is cost_base=4 (rule2, rule1, rule0, null), and the moving cost in the high address direction cost_high=5 (rule4, rule5, rule6, rule?, null), so that when the moving direction is determined as the low address direction and the moving cost in the low address direction cost-low is equal to cost_base (both are 4), 1 is subtracted from the value of the priority baseline pointer parameter PRIO_BASE. The destination address dst_pos is determined as the current location pointed to by the priority baseline pointer parameter PRIO_BASE, and the rule0, rule1, rule2 and rule3 are moved in the low address direction one by one. The rule0 is moved to the current location pointed to by the PRIO_BASE until the location of the storage address ins_pos is vacated, and rule8 is stored in the location.

Based on the same technical concept, the embodiments of the present invention also provide an apparatus for processing an ACL rule, as shown in Fig. 9, which includes: a result storage module 101 and a priority processing module 102. The result storage module 101 is configured to store relative priorities corresponding to ACL rules. The priority processing module 102 is configured to receive the relative priorities corresponding to a plurality of ACL rules output by the result storage module 101, perform priority processing to obtain an absolute priority, and send the absolute priority and the corresponding ACL rule and a result thereof to a priority comparison module.

In some embodiments, the apparatus for processing an ACL rule further includes a priority comparison module 103. The priority comparison module 103 is configured to compare a plurality of input absolute priorities and output a result corresponding to an ACL rule with the highest priority.

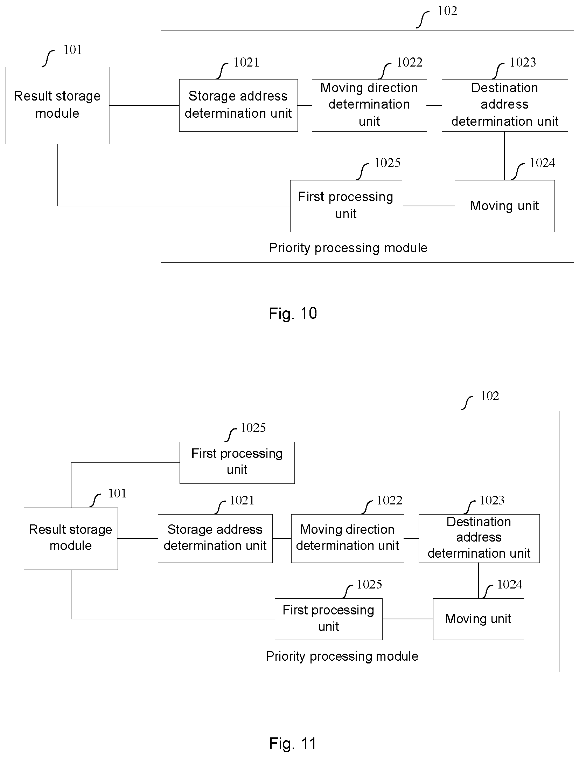

In conjunction with Figs. 9 and 10, the storage addresses of the ACL rules in the apparatus for processing an ACL rule are the relative priorities of the ACL rules, a priority baseline pointer parameter is preset in the ACL processing apparatus, the priority baseline pointer parameter points to the stored ACL rule with the highest priority, and a value of the priority baseline pointer parameter is the relative priority of the stored ACL rule with the highest priority.

The priority processing module 102 includes a storage address determination unit 1021, a moving direction determination unit 1022, a destination address determination unit 1023, a moving unit 1024, and a first processing unit 1025. The storage address determination unit 1021 is configured to determine a storage address of an ACL rule to be stored based on a priority relationship between the ACL rule to be stored and the stored ACL rules.

The moving direction determination unit 1022 is configured to determine, in a case that the ACL rule is stored in the storage address currently, a moving direction based on the storage address, the priority baseline pointer parameter, a maximum storage address of the ACL rules, a null address closest to the storage address in a low address direction, and a null address closest to the storage address in a high address direction.

The destination address determination unit 1023 is configured to determine a moving destination address at least based on the moving direction.

The moving unit 1024 is configured to move the ACL rules one by one based on the moving direction and the destination address until the storage address is vacated, each time an ACL rule is moved, the relative priority of the currently moved ACL rule being updated.

The first processing unit 1025 is configured to store the ACL rule to be stored in the storage address.

The result storage module 101 is configured to record a relative priority of the ACL rule to be stored based on the storage address.

In some embodiments, the moving direction determination unit 1022 is configured to: calculate a moving cost in the low address direction based on the storage address, the priority baseline pointer parameter, the maximum storage address of theACL rules, and the null address closest to the storage address in the low address direction; calculate a moving cost in the high address direction based on the storage address and the null address closest to the storage address in the high address direction; and determine the moving direction based on the moving cost in the low address direction and the moving cost in the high address direction.

In some embodiments, the moving direction determination unit 1022 is configured to determine a minimum of the moving cost in the low address direction and the moving cost in the high address direction, and use a direction corresponding to the minimum as the moving direction.

In some embodiments, the moving direction determination unit 1022 is configured to obtain the moving cost in the high address direction by calculating a difference between the null address closest to the storage address in the high address direction and the storage address.

In some embodiments, the moving direction determination unit 1022 is configured to: calculate a first moving cost based on the storage address, the priority baseline pointer parameter, and the maximum storage address of the ACL rules, the first moving cost being a moving cost from the storage address to an ACL rule address pointed to by the priority baseline pointer parameter; calculate a second moving cost based on the storage address, the null address closest to the storage address in the low address direction, and the maximum storage address of the ACL rules, the second moving cost being a moving cost for moving from the storage address to the null address closest to the storage address in the low address direction; and determine a minimum of the first moving cost and the second moving cost as the moving cost in the low address direction.

In some embodiments, the moving direction determination unit 1022 is configured to: enable, when the storage address is less than the value of the priority baseline pointer parameter, a closed loop of addresses for storing the ACL rules is formed, and calculate the first moving cost in the loop in the low address direction; and calculate, when the storage address is higher than or equal to the value of the priority baseline pointer parameter, the first moving cost in the high address direction.

In some embodiments, the moving direction determination unit 1022 is configured to: enable, when the storage address is less than the null address closest to the storage address in the low address direction, a closed loop of the addresses for storing the ACL rules is formed, and calculate the second moving cost in the loop in the low address direction; and calculate, when the storage address is higher than or equal to the null address closest to the storage address in the low address direction, the second moving cost in the high address direction.

In some embodiments, the destination address determination unit 1023 is configured to determine, when the moving direction is the low address direction and the moving cost in the low address direction is the first moving cost, the moving destination address by subtracting 1 from the value of the priority baseline pointer parameter; determine, when the moving direction is the low address direction and the moving cost in the low address direction is the second moving cost, the moving destination address to be the null address closest to the storage address in the low address direction; and determine, when the moving direction is the high address direction, the moving destination address to be the null address closest to the storage address in the high address direction.

In some embodiments, the destination address determination unit 1023 is also configured to subtract 1 from the value of the priority baseline pointer parameter when the moving direction is the low address direction and the moving cost in the low address direction is the first moving cost after the moving destination address is determined at least based on the moving direction.

In some embodiments, the storage address determination unit 1021 is configured to: determine, when a priority of the ACL rule to be stored is lower than a lowest priority k of the stored ACL rules, the storage address of the ACL rule to be stored to be (k+1); and determine, when the priority of the ACL rule to be stored is higher than the lowest priority k of the stored ACL rules and lower than a highest priority of the stored ACL rules, a maximum priority p of priorities of the stored ACL rules which are lower than the priority of the ACL rule to be stored, and determine the storage address of the ACL rule to be stored as p.

In some embodiments, the first processing unit 1025 is also configured to: delete an ACL rule to be deleted from the stored ACL rules; and add, when the storage address of the ACL rule to be deleted is equal to the value of the priority baseline pointer parameter, 1 to the value of the priority baseline pointer parameter.

In some embodiments, as shown in Fig. 11, the priority processing module 102 further includes a second processing unit 1026. The second processing unit 1026 is configured to determine, when a service message is received and the service message hits at least two ACL rules, a relative priority of each hitACL rule, and calculate an absolute priority of each hitACL rule at least based on the relative priority of each hit ACL rule and the priority baseline pointer parameter.

In some embodiments, the second processing unit 1026 is configured to: calculate, when the relative priority of the hit ACL rule is higher than or equal to the value of the priority baseline pointer parameter, an absolute priority of the hit ACL rule in the high address direction based on the relative priority of the hitACL rule and the value of the priority baseline pointer parameter; and enable, when the relative priority of the hit ACL rule is lower than the priority baseline pointer parameter, form a closed loop of the addresses for storing the ACL rules, and calculate an absolute priority of the hit ACL rule in the loop in the low address direction based on the relative priority of the hit ACL rule, the value of the priority baseline pointer parameter, and the maximum storage address of the ACL rules.

The embodiments of the present invention also provide a computer device. The computer device includes: one or more processors and a storage device. The storage device stores one or more programs. The one or more programs are executed by the one or more processors to enable the one or more processors to implement the ACL rule processing method provided by the above embodiments.

The embodiments of the present invention also provide a readable storage medium, storing a computer program. The computer program, when executed, implements the ACL rule processing method provided by the above embodiments.

It can be understood by those of ordinary skill in the art that all or some steps in the method disclosed above and function modules/units in the device may be implemented as software, firmware, hardware, or a proper combination thereof. In a hardware implementation mode, division of the function modules/units mentioned in the above descriptions does not necessarily correspond to division of physical components. For example, a physical component may have multiple functions, or a function or step may be executed cooperatively by a plurality of physical components. Some physical components or all physical components may be implemented as software executed by a processor, such as a central processing unit, a digital signal processor, or a microprocessor, or implemented as hardware, or implemented as integrated circuits, such as application specific integrated circuits. Such software may be distributed in a computer readable medium that includes a computer storage medium (or a non-transitory medium) and a communication medium (or a temporary medium). As known to those of ordinary skill in the art, term computer storage medium includes volatile, nonvolatile, removable, and irremovable media implemented in any method or technology for storing information (such as computer-readable instructions, data structures, program modules, or other data). The computer storage medium includes, but not limited to, an RAM, a Read-Only Memory (ROM), an Electrically Erasable Programmable ROM (EEPROM), a flash memory or another memory technology, a Compact Disc-ROM (CD-ROM), a Digital Video Disk (DVD) or another optical disk memory, a cassette, a magnetic tape, a disk memory or another magnetic memory device, or any other medium that may be configured to store desired information and is accessible for a computer. In addition, it is known to those of ordinary skill in the art that the communication medium usually includes a computer-readable instruction, a data structure, a program module, or other data in modulated data signals of, for example, a carrier or another transmission mechanism, and includes any information delivery medium.

The exemplary embodiments have been disclosed herein. Specific terms are used, but they are only used and explained as general descriptive meanings rather than limitations. In some examples, it is apparent to those skilled in the art that, unless otherwise specified, features, properties, and/or elements described in combination with specific embodiments may be used independently or in combination with features, properties, and/or elements described in combination with other embodiments. Therefore, it can be understood by those skilled in the art that various variations in form and detail may be made without departing from the scope of the present invention described in the appended claims.

## Claims

1. A method for processing an Access Control List, ACL, rule, applied to an apparatus for processing an ACL rule, wherein a storage address of an ACL rule in the apparatus is a relative priority of the ACL rule, a priority baseline pointer parameter is preset in the apparatus, the priority baseline pointer parameter points to a stored ACL rule with the highest priority, a value of the priority baseline pointer parameter is a relative priority of the stored ACL rule with the highest priority, and the method comprises:
determining a storage address of an ACL rule to be stored based on a priority relationship between the ACL rule to be stored and stored ACL rules;
determining, in a case that an ACL rule is stored in the storage address currently, a moving direction based on the storage address, the priority baseline pointer parameter, a maximum storage address of the ACL rules, a null address closest to the storage address in a low address direction, and a null address closest to the storage address in a high address direction;
determining a moving destination address at least based on the moving direction;
moving ACL rules one by one based on the moving direction and the destination address until the storage address is vacated, wherein, each time a ACL rule is moved, the relative priority of the currently moved ACL rule is updated; and
storing the ACL rule to be stored in the storage address, and recording a relative priority of the ACL rule to be stored based on the storage address.

2. The method according to claim 1, wherein determining, in a case that an ACL rule is stored in the storage address currently, a moving direction based on the storage address, the priority baseline pointer parameter, a maximum storage address of theACL rules, a null address closest to the storage address in a low address direction, and a null address closest to the storage address in a high address direction comprises:
calculating a moving cost in the low address direction based on the storage address, the priority baseline pointer parameter, the maximum storage address of the ACL rules, and the null address closest to the storage address in the low address direction;
calculating a moving cost in the high address direction based on the storage address and the null address closest to the storage address in the high address direction; and
determining the moving direction based on the moving cost in the low address direction and
the moving cost in the high address direction.

3. The method according to claim 2, wherein determining the moving direction based on the moving cost in the low address direction and the moving cost in the high address direction comprises:
determining a minimum of the moving cost in the low address direction and the moving cost in the high address direction, and using a direction corresponding to the minimum as the moving direction.

4. The method according to claim 2, wherein calculating the moving cost in the high address direction based on the storage address and the null address closest to the storage address in the high address direction comprises:
obtaining the moving cost in the high address direction by calculating a difference between the null address closest to the storage address in the high address direction and the storage address.

5. The method according to claim 2, wherein calculating a moving cost in the low address direction based on the storage address, the priority baseline pointer parameter, the maximum storage address of the ACL rules, and the null address closest to the storage address in the low address direction comprises:
calculating a first moving cost based on the storage address, the priority baseline pointer parameter, and the maximum storage address of the ACL rules, the first moving cost being a moving cost for moving from the storage address to an ACL rule address pointed to by the priority baseline pointer parameter;
calculating a second moving cost based on the storage address, the null address closest to the storage address in the low address direction, and the maximum storage address of the ACL rules, the second moving cost being a moving cost for moving from the storage address to the null address closest to the storage address in the low address direction; and
determininga minimum of the first moving cost and the second moving cost as the moving cost in the low address direction.

6. The method according to claim 5, wherein calculating a first moving cost based on the storage address, the priority baseline pointer parameter, and the maximum storage address of the ACL rules comprises:
forming, when the storage address is lower than a value of the priority baseline pointer parameter, a closed loop of addresses for storing the ACL rules, and calculating the first moving cost in the loop in the low address direction; and
calculating, when the storage address is higher than or equal to the value of the priority baseline pointer parameter, the first moving cost in the high address direction.

7. The method according to claim 5, wherein calculating a second moving cost based on the storage address, the null address closest to the storage address in the low address direction, and the maximum storage address of the ACL rules comprises:
forming, when the storage address is lower than the null address closest to the storage address in the low address direction, a closed loop of addresses for storing the ACL rules, and calculating the second moving cost in the loop in the low address direction; and
calculating, when the storage address is higher than or equal to the null address closest to the storage address in the low address direction, the second moving cost in the high address direction.

8. The method according to claim 5, wherein determining a moving destination address at least based on the moving direction comprises:
determining, when the moving direction is the low address direction and the moving cost in the low address direction is the first moving cost, the moving destination address by subtracting 1 from the value of the priority baseline pointer parameter;
determining, when the moving direction is the low address direction and the moving cost in the low address direction is the second moving cost, the moving destination address to be the null address closest to the storage address in the low address direction; and
determining, when the moving direction is the high address direction, the moving destination address to be the null address closest to the storage address in the high address direction.

9. The method according to claim 8, wherein, when the moving direction is the low address direction and the moving cost in the low address direction is the first moving cost, after determining the moving destination address at least based on the moving direction, the method further comprises: subtracting 1 from the value of the priority baseline pointer parameter.

10. The method according to claim 1, wherein determining a storage address of the ACL rule to be stored based on the priority relationship between the ACL rule to be stored and the stored ACL rules comprises:
determining, when a priority of the ACL rule to be stored is lower than a lowest priority k of the stored ACL rules, the storage address of the ACL rule to be stored to be k+1; and
determining, when the priority of the ACL rule to be stored is higher than the lowest priority k of the stored ACL rules and lower than a highest priority of the stored ACL rules, a maximum priority p of priorities of the stored ACL rules which are lower than the priority of the ACL rule to be stored, in the stored ACL rules, and determining the storage address of the ACL rule to be stored as p.

11. The method according to claim 1, further comprising:
deleting an ACL rule to be deleted from the stored ACL rules; and
adding 1 to the value of the priority baseline pointer parameter when the storage address of the ACL rule to be deleted is equal to the value of the priority baseline pointer parameter.

12. The method according to any one of claims 1-11, further comprising:
determining, when a service message is received and the service message hits at least two ACL rules, a relative priority of each hit ACL rule, and calculating an absolute priority of each hitACL rule at least based on the relative priority of each hitACL rule and the priority baseline pointer parameter.

13. The method according to claim 12, wherein calculating the absolute priority of each hit ACL rule at least based on the relative priority of each hit ACL rule and the priority baseline pointer parameter comprises:
calculating, when the relative priority of the hit ACL rule is higher than or equal to the value of the priority baseline pointer parameter, an absolute priority of the hit ACL rule in the high address direction based on the relative priority of the hitACL rule and the value of the priority baseline pointer parameter; and
forming, when the relative priority of the hitACL rule is lower than the priority baseline pointer parameter, a closed loop of addresses for storing the ACL rules and calculating an absolute priority of the hitACL rule in the loop in the low address direction based on the relative priority of the hit ACL rule, the value of the priority baseline pointer parameter, and the maximum storage address of the ACL rules.

14. An apparatus for processing an Access Control List, ACL, rule, wherein, a storage address of an ACL rule in the apparatus for processing an ACL rule is a relative priority of the ACL rule, a priority baseline pointer parameter is preset in the ACL processing apparatus, the priority baseline pointer parameter points to a stored ACL rule with the highest priority, and a value of the priority baseline pointer parameter is the relative priority of the stored ACL rule with the highest priority; the apparatus comprises: a result storage module and a priority processing module, the priority processing module comprising a storage address determination unit, a moving direction determination unit, a destination address determination unit, a moving unit, and a first processing unit, wherein:
the storage address determination unit is configured to determine a storage address of an ACL rule to be stored based on a priority relationship between the ACL rule to be stored and stored ACL rules;
the moving direction determination unit is configured to determine, in a case that the ACL rule is stored in the storage address currently, a moving direction based on the storage address,
the priority baseline pointer parameter, a maximum storage address of the ACL rules, a null address closest to the storage address in a low address direction, and a null address closest to the storage address in a high address direction;
the destination address determination unit is configured to determine a moving destination address at least based on the moving direction;
the moving unit is configured to move the ACL rules one by one based on the moving direction and the destination address until the storage address is vacated, wherein, each time an ACL rule is moved, the relative priority of the currently moved ACL rule is updated;
the first processing unit is configured to store the ACL rule to be stored in the storage address; and
the result storage module is configured to record a relative priority of the ACL rule to be stored based on the storage address.

15. A computer device, comprising:
one or more processors; and
a storage device, storing one or more programs;
wherein the one or more programs are executed by the one or more processors to enable the one or more processors to implement the method for processing an Access Control List, ACL, rule as claimed in any one of claims 1-13.

16. A computer readable medium, storing a computer program, wherein the program, when executed, implements the method for processing an Access Control List, ACL, rule as claimed in any one of claims 1-13.
